# EUROPEAN PATENT APPLICATION

(11) **EP 4 763 346 A1**
(43) Date of publication of application: **24.06.2026**
(21) Application number: 24220653.0
(22) Date of filing: 17.12.2024
(51) Int. Cl.: B05B 11/00, B05B 11/02, B65D 47/24, B65D 75/58, B65D 81/32, B65D 83/62, B67D 7/02, F16L 37/44, B65D 83/48, A47L 15/44, B05B 11/10, B65D 83/68

(54) **CONSUMER PRODUCTS WITH A VALVE ASSEMBLY**

(71) Applicant: The Procter & Gamble Company, Cincinnati, OH 45202 (US)
(72) Inventor: DE WILDE, Vincent Hubert Monique, 1853 Strombeek-Bever (BE); HOEFTE, Paulus Antonius Augustinus, 1853 Strombeek-Bever (BE)
(74) Representative: P&G Patent Belgium UK

(57) **Abstract**

A consumer product (1) a flexible body and at least one valve assembly (10) comprising: a valve obturator (2) having a housing (22) configured to receive a nozzle head (60), wherein the valve obturator (2) is configured to move from a closed position to an open position upon application, by the nozzle head (60) received in the housing (22), of a first force oriented in a first direction; the valve obturator (2) having at least one locking tab (24), wherein the valve obturator (2) is configured to move from the open position to the closed position upon application, by the nozzle head (60) received in the housing (22), of a second force (F2) on the at least one locking tab (24), the second force (F2) being oriented in a second direction opposite the first direction.

## Description

### BACKGROUND

This disclosure generally relates to containers for detergent products, in particular, in the realm of domestic use, e.g. automatic dish-washing (ADW) machines. It is important for fast-moving consumer goods (FMCG) to be environmentally friendly, cost-efficient and reliable. The present disclosure proposes a re-usable and/or re-fillable consumer product for ADW machines.

### BRIEF DESCRIPTION OF THE DRAWINGS

FIG. 1 illustrates an example of a consumer product and a pair of nozzles.
FIG. 2 illustrates an exploded view of an example of a valve assembly and a nozzle.
FIG. 3 shows an example of a valve assembly in a closed position.
FIG. 4 shows an example of a valve assembly in a closed position receiving a nozzle head and making a leak tight connection.
FIGS. 5 to 8 show various successive states of a valve assembly.
FIG. 9 illustrates an isometric view of an example valve obturator.
FIG. 10 shows a series of valve holders arranged on a guiding bar.
FIG. 11 shows the series of valve holders of FIG. 8 received in a casing of a machine.
FIG. 12 a flow chart of an example method of operating the valve assembly.

### DETAILED DESCRIPTION

The present disclosure relates to a consumer product comprising: a flexible body delimiting at least two compartments; an auto-dishwashing detergent composition contained in the at least two compartments; at least two valve assemblies each fluidly connected to at least one respective compartment of the at least two compartments, wherein each of the at least one valve assembly comprises: a valve holder attached to the flexible body, the valve holder comprising a valve seat comprising a distal section away from the respective compartment, the distal section comprising a tapered surface, the tapered surface being narrower in a proximal direction close to the respective compartment and the tapered surface being wider in a distal direction away from the respective compartment; and a valve obturator engaged in the valve seat and reversibly movable between a closed position and an open position, the valve obturator comprising: a housing configured to receive a nozzle head; an abutment surface, wherein the valve obturator is configured to move from the closed position to the open position upon application, by the nozzle head received in the housing, of a first force on the abutment surface, the first force being oriented in the proximal direction; and at least one locking tab contacting the tapered surface as the valve obturator is in the closed position, wherein the valve obturator is configured to move from the open position to the closed position upon application, by the nozzle head received in the housing, of a second force on the at least one locking tab, the second force being oriented in the distal direction, wherein the respective valve holders of said two or more valve assemblies are fixed on a guiding bar.

The valve assembly cooperates with a nozzle head such that a simple one-direction movement of the nozzle head in the proximal direction allows to move the valve obturator into the open position by disengaging the locking tabs from the tapered surface of the seat. Likewise, a simple one-direction movement of the nozzle head in the distal direction pulls the valve obturator back into the closed position. The valve assembly is therefore easy to operate and the overall design of the valve assembly enables a high degree of recyclability: in absence of springs, sensor or electronics, silicone, rubber, TPE, metal, ceramic, copper, etc., the valve assembly may effectively be made of two pieces only, the valve holder and the valve obturator, and the valve assembly can therefore be conveniently recycled.

The "one-direction" translation movement mentioned above does not exclude the possibility to furthermore rotate the nozzle with respect to the valve obturator or holder. In a variant, the movement may be a helical movement. Likewise, the closed and open positions may differ axially and/or rotationally.

Beyond the functionality of the tapered surface engaging the locking tabs, this tapering facilitates macro to micro alignment of the nozzle with the valve.

It is to be noted that the orientation of the first and/or second force is arbitrarily depicted here and they may be expressed differently (third law of Newton): a similar effect is achieved when the first force (the one that opens the valve) is a force in the distal direction applied by the abutment surface on the nozzle head, and when the second force (the one that closes the valve) is in the proximal direction and is applied by the locking tab on the nozzle head.

As the opening and closing of the valve results from a relative movement of the nozzle head with respect to the valve holder, the nozzle head may be actuated while the valve holder is remaining immobile, or vice versa as the nozzle head remains immobile. Alternatively, both the nozzle head and the valve holder may move linearly towards or away from each other to operate the valve.

The consumer product according to the present disclosure is advantageously compliant to current and expected sustainability requirements for single use FMCG packaging, as it does not contain for instance metal springs or silicone parts. The simple and reliable design makes the consumer product economically viable. The specific design of the valve assembly makes it particularly compact and space efficient. The valve assembly is reliable and not prone to be inadvertently opened when being stored or handled before use. As the opening/closing of the valve is operated by a nozzle head having specific shape/dimension to operate the movement of the valve obturator, the user cannot gain access to the content of the consumer product. This makes the consumer product safe to handle. This also means that the content of the consumer product is protected from the environment. Furthermore, the valve assembly is reliable and can remain in the open configuration for the necessary duration (e.g. several weeks or months) while remaining functional.

The nozzle head may be attached to or may be a part of a receiving device. The receiving device may be one of: a storage container; a pipe or a machine, intended to receive fluid from the flexible body. The receiving device may be a trigger, a pump, or a dosing system. Alternatively, the nozzle head may be attached to or may be a part of a fluid source, for instance an electrical dispensing device or an instore dispensing machine or a filling machine. Hence, it is possible through the same valve assembly of the consumer product to fill the compartment(s) of the flexible body with one or more fluids fed from the nozzle head, or to extract fluid(s) contained in the compartment(s) of the flexible body through the nozzle head.

For propelling the fluid out of or into the compartments once the valve assembly is open, the fluid may be under pressure in the compartment or in the nozzle head, and/or a vacuum may be generated in the compartment or in the nozzle head. External forces such as gravity or electromagnetic forces (if the fluid has magnetic properties) may be used as well as propelling force. A pump can be used to propel (or suck) the fluid. For example, the pump may be a peristaltic pump, a gear pump, a membrane pump, a piezo pump, a reciprocating pump, or an electrovalve, or any kind of pump suitable for delivering a precise amount of fluid on demand. The pump may be integrated in a dishwashing machine or can be part of a semi-integrated receiver or free-standing device.

A consumer product should in this disclosure be understood as a product which is provided, among others, to end consumers. Such consumer products may for example be available for purchase in supermarkets and end consumers may store such consumer products in their homes. Consumer products may be provided in large quantities and environmental concerns should thereby be taken into consideration when designing the products. Consumer products should also be designed taking transportation to a retail store into account. Consumer products should also be robust so as to withstand transportation as part of an e-commerce shipment. Consumer products should also be designed considering on-the-shelf storage in a retail store. Consumer products should also be designed taking transportation from a retail store to a consumer home into account. Consumer products should also be designed taking storage at a private end-consumer home into account. Consumer products should also be designed taking use of the consumer product at a private end consumer home into account. Consumer products should also be designed taking disposal into account. Consumer products should not be expensive to produce and should generate minimal waste while manufacturing and at end of life for re-use or recycling or disposal.

A flexible body delimiting at least two compartments is intended to depict a solid material delimiting respective inner spaces. As the at least two compartments are being filled with a fluid material, the inner spaces can expand and the solid material can deform. Also, compressing the solid material can produce an inner pressure on the fluid composition.

The at least two compartments according to the present disclosure are intended to receive an auto-dishwashing detergent composition. Such a composition is intended to be used as a fluid composition assisting washing of dishes in a domestic machine. Detergent compositions should be understood in this disclosure as a fluid composition, containing at least one of: a liquid; a semiliquid; a gel; a gas; and a powder. The detergent composition may comprise at least one of: bleach, a rinse aid, enzymes, shine additive, water softening agent, perfume, glass and metal care products, drying aid, etc. Examples of a fluid composition are given below.

The consumer product of the present disclosure is intended to be used in automatic dish washers (ADW). In that context and in absence of the consumer product as presented herein, a user may dispense an amount of detergent composition that is not appropriate. The user may provide too much or too little detergent for a given level of dirt, a given cycle and a given number of cutlery items. Using too much detergent composition results in consuming more detergent than needed and rejecting too much detergent composition in the waste waters. Using too little detergent results in the potential need for the user to re-wash the dish, implying a too high consumption of detergent composition and/or water. In that context, the consumer product of the present disclosure enables the machine, rather than the user, to dose the amount of detergent composition used based on preset parameters (e.g. level of dirt, a cycle and a number of cutlery items...). A precise amount of detergent composition can therefore be dispensed, in the interest of the environment.

In addition, the consumer product can deliver segregated chemistry. The provision of more than one compartments enable to use fluids which may not be compatible. The various fluids can be delivered in different combinations and amounts at different points in time throughout the wash cycle to maximize the performance while minimizing the amount of chemistry.

The guiding bar can allow to lock the valve assemblies in place, for instance as respective nozzle heads engage the respective valve assemblies, or when re-filling the flexible body. The guiding bar may also be used to properly and securely position the consumer product in a machine, e.g. in an appropriate chamber of an ADW machine.

In some examples, the valve obturator and the valve holder are made of a same material, preferably a polymer material, more preferably polyethylene or polypropylene or PET with a range of post-consumer recycled material, PCR, comprised between 0 and 100%. Providing several elements of the consumer product in the same material enables to make possible and/or to facilitate the recycling of the consumer product.

In some examples, the valve assembly and the flexible body are made of a same polymer material.

In some examples, the at least one locking tab is configured to assume a radially outward resting position as the valve obturator is in the closed position, enabling the nozzle head moving in the distal direction to be released; and the at least one locking tab is configured to assume a radially inward pre-stressed position as the valve obturator is in the open position. This further increases the reliability of the valve assembly as the natural spring effect of the locking tabs assists the closure of the valve, ensuring an absence of leakage as the valve obturator is in the closed position. An absence of leakage is also beneficial for the environment. This design also helps preventing inadvertent opening of the valve (by fingers, or external shocks or impacts) during manufacturing, storage, transport, or at home. The valve can only switch to its open state when it is engaged with an appropriately dimensioned counterpart (nozzle head) and when a sufficient force is applied, overcoming the friction caused by the locking tabs against the valve holder tapered wall.

In some examples, the at least one locking tab is configured such that, as the nozzle head pushes the abutment surface, the at least one locking tab bends radially inwardly, progressively contacting an outer surface of the nozzle and a central portion of the valve seat. By bending the locking tabs on the nozzle head when the nozzle head engages the valve, leakage that could happen at the periphery of the nozzle head as the valve obturator is in the open position is prevented or reduced. This design thus participates in making the valve assembly reliable.

In some examples, the at least one locking tab comprises an inner coupling element configured to progressively engage an outer coupling element of the nozzle head as the valve obturator moves from the closed position to the open position. The inner coupling element may be a rig or a groove. The outer coupling element may respectively be a groove or a rib. The inner coupling element and the outer coupling element may have a complementary shape to provide a leak tight arrangement as the valve obturator is in the open position.

In some examples, the groove/rib may be a thread: the nozzle may comprise an external thread whereas the locking tabs comprise an inner thread of shape matching the external thread. The inner thread may be segmented as the locking tabs may be distant from each other, separated by respective gaps. With that design, the relative movement between the nozzle and the valve holder may be a helical movement, i.e., combining an axial translation with a circumferential rotation. This embodiment may provide the valve assembly with a precise opening for regulating the fluid flow rate.

In some examples, the valve seat comprises a front section comprising the tapered surface, a central section comprising a substantially cylindrical surface and a rear section comprising an inwardly tapered cantilevered ring. This arrangement is particularly advantageous for firmly holding the valve obturator in the valve seat.

In some examples, two or more valve assemblies of the at least two valve assemblies are arranged on a same side of the consumer product. In some examples, the two or more compartments may contain two or more respective (distinct) detergent compositions.

In some examples, the respective valve holders of the at least two valve assemblies and the guiding bar are integrally formed. This is beneficial for the recycling operations of the consumer product. Additionally, this design may be advantageous for cost control, as only one set of tools may be needed. The guiding bar can act as a sliding rail to manipulate /guide the consumer product in manufacturing on a filling line. This is especially true when the consumer product comprises several valves, for ensuring a good alignment with respective filling heads. The valve holders and guiding bar may be molded in 1 piece, and the valve obturators may then be snapped in the respective valve holders. In use, the guiding bar may also be used to properly and securely position the consumer product in a machine, e.g. in an appropriate chamber of an ADW.

In some examples, the respective valve obturators of said two or more valve assemblies move from their respective close position to their respective open position along directions that are parallel to one another. This arrangement enables to properly engage two or more nozzle heads with respective valve assemblies in a single relative motion of the valve assemblies respective to the nozzle heads.

In some examples, the at least one locking tab comprises an annular row of two or more locking tabs, circumferentially distant from each other. This design provides a good mechanical balance and a reliable positioning of the valve obturator in the closed position. It also provides the desired friction between the obturator and the valve holder to prevent unintentional opening.

In some examples, the valve obturator comprises a central channel extending from the abutment surface to at least one peripheral aperture, wherein the at least one peripheral aperture is in fluid connection with the respective compartment of the flexible body as the valve obturator is in the open position. This configuration participates in making the valve assembly reliable, as the relative position of the valve obturator may be the only parameter ruling the state (open/closed) of the valve.

In some examples, the valve obturator is snapped in the valve holder. This is beneficial both for manufacturing the valve assembly and for dismounting the valve assembly for maintenance or recycling. For example, a same valve holder may be suited to hold valve obturators of distinct shapes, depending on the desired application or nature of the fluid to be used, or on the desired flow rate of fluid when the valve is open (bigger or smaller conduit/apertures). The valve obturator may be snapped in by a translation in the proximal direction.

In some examples, the valve obturator comprises at least one stopper at one axial end thereof opposite the locking tab, the at least one stopper abutting against a cantilevered ring of the valve holder as the valve obturator is in the closed position. This arrangement prevents or reduces the risk of the valve obturator exiting the valve seat in use, e.g. as it is being pulled by the nozzle head, thereby participating in the reliability of the valve assembly. This means that the resistance force created by the stopper is greater than the frictions occurring as the nozzle withdraws the valve obturator back to the closed position and disengages from the locking tabs. In a variant example, the at least one stopper may be arranged at an intermediate location of the valve obturator (i.e. not an end). In some variants, the stopper preventing the escape of the valve can be formed by a flange of the valve holder at a distal side of the valve holder and the locking tabs in their resting (radially expanded) position (or other parts of the valve obturator) can abut against such a flange as the nozzle head withdraws from contact with the valve obturator.

In some examples, the cantilevered ring is tapered inwardly and applies a radial force on an external surface of the valve obturator. This is again beneficial for reliably controlling the positioning and the movement of the valve obturator.

In some examples, the valve obturator comprises an annular external sealing rib. This further improves the leak tight property of the valve assembly. In some cases, more than one external sealing rib can be foreseen.

In some examples, the valve holder comprises an eye-shaped port and the flexible body comprises at least one plastic film welded to the eye-shaped port. This arrangement enables to provide a properly sealed consumer product.

In some examples, the compartments are ventless. The flexibility of the flexible body and of the compartment(s) allow the compartment(s) to be filled in or emptied while the flexible body is deformed and without the need to compensate with an air intake (when the compartment is being emptied) or with an air outlet (when the compartment is being filled in). Such an airless system is advantageous as it simplifies the design (no need for an air inlet/outlet), it avoids air from interacting with the content in the compartment (oxidation or other chemical reactions are avoided), and it enables to use the consumer product in a humid or sealed environment, where pure air is not immediately available in the surrounding of the consumer product. Such an airless consumer product also prevents contamination. Air or fluid is not subject to leakage through an air venting valve. Volume variations due to temperature changes (collapse, expansion) are prevented as well, which is beneficial for transport, storage, in the trade or in use. The absence of air also enables use of the consumer product in any orientation without needing dip-tubes and the like. This offers some versatility for the choice of orientation of the consumer product in the (door or any other position of the) dish washer.

In some examples, the housing comprises a tamper-proof element. A tamper-proof element ensures the end user that the content of the product has not been altered from the factory and may help prevent any leakage, should the valve assembly be unexpectedly damaged during transport or storage. The tamper-proof element may be formed by an aluminum foil, a plastic film, or an adhesive patch (label, sticker, etc.) covering the valve mouth. The adherence of the tamper-proof element to the consumer product may be such that the power of an adult hand may be required to remove the tamper-proof element from the consumer product. The tamper-proof element may be made of a biodegradable material or a water-soluble material. The tamper-proof element may be pierced by the nozzle upon first use of the consumer product. The tamper-proof element may be an integrated plastic plug, cap or cover that is torn away, removed or folded backwards upon first use of the consumer product.

In some examples, the consumer product comprises an identifier (e.g. NFC, RFID tag, etc.) adapted to interact, wirelessly or through electric contact, with the nozzle head, or with the device comprising the nozzle head, or with a computing device such as a smartphone. The identifier may be any of: NFC, RFID tag, 2D or 3D barcode, EAN code, microchip. The identifier may be read by the dishwasher or via a specific app on a smartphone or other computing device. The dishwasher or any other device (e.g. dispensing device or filling machine) can have access to write on or alter the identifier. In some examples, it may be advantageous for the dishwasher to know which fluid is held in which compartments of the consumer product. This may be affected to the consumer product by a filling machine or a dispensing machine. The identifier may contain information regarding the quantities and nature of the content of the various compartments. The dish washer can thus adapt the algorithm to be used (based on the content of dish/cutlery in the machine as well as based on the content of the consumer product). The identifier may be used for quality control or manufacturing traceability, production date, expiration date, amount of fluid left in each compartment, etc. The dish washer may prompt a warning to a user when an amount of a compartment falls below a predetermined threshold. The identifier can be used for automatic or semi-automatic order of a new consumer product. If removed from the dishwasher, the identifier may be used to store a current level of fluid in the various compartments.

The present disclosure may also pertain to a method of operating the consumer product comprising opening the valve assembly with a nozzle head and feeding a fluid contained in the compartment to the nozzle head.

The present disclosure may also pertain to a method for filling or refilling the consumer product as described above comprising opening the valve assembly with a nozzle head and feeding a fluid to the compartment via the nozzle head.

### Detailed description of the figures

The figures present various aspects of a valve assembly. Each distinct aspect presented in one of the figures can be combined with aspects presented in other figures, unless the present document explicitly excludes such a combination.

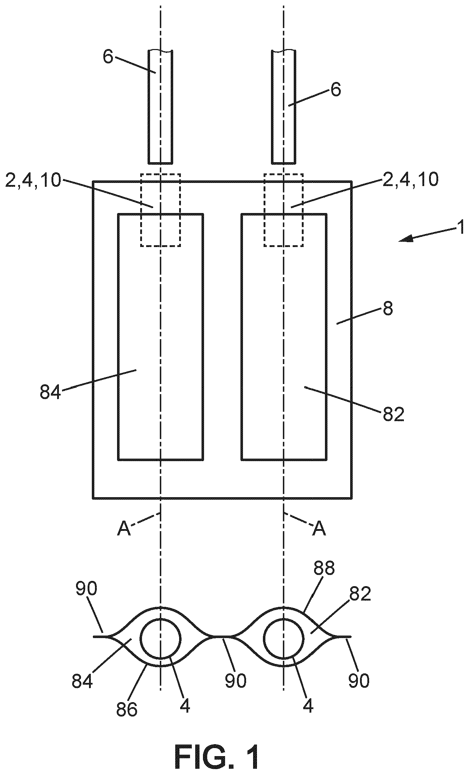

FIG. 1 illustrates schematically, in a top portion of the figure, an example of a consumer product 1 and a pair of nozzles 6. The lower portion of FIG. 1 shows a consumer product 1 seen when facing valve assemblies 10 of the consumer product 1.

The consumer product 1 comprises at least two valve assemblies 10 comprising a valve obturator 2 received in a valve holder 4. In the example shown on FIG. 1, the consumer product 1 comprises two of such valve assemblies 10.

The consumer product 1 further comprises a flexible body 8 comprising at least two compartments suitable for containing an auto-dishwashing detergent composition. In the example shown, the flexible body comprises exactly two compartments 82, 84. Each valve assembly 10 is in fluid communication with a respective compartment 82, 84.

In other examples, one valve assembly 10 may be in fluid communication with more than one compartment, or one compartment may be in fluid communication with more than one valve assembly.

In preferred embodiments, the consumer product comprises between 2 and 4 valve assemblies, each fluidly connected to exactly one respective compartment.

The compartments 82, 84 are ventless, i.e., they can be filled in or emptied by deforming the flexible body and without the need to inject air or expulse air. Each of the compartments 82,84 may have a respective shape and volume. The volume of each compartment may be comprised between 5ml and 2000ml.

Another view of the consumer product 1 shown in the lower portion of FIG. 1 shows that the flexible body 8 may be made of two films 86, 88 sealed (e.g. heat sealed) together at sealed locations 90 to form the compartments 82, 84. The films 86, 88 may be sealed around the valve holder 4 of each valve assembly 10. The two films 86,88 may be constituted by a single film folded on itself.

As discussed in more detail below, the consumer product 1 can be safely handled as the valve assembly(ies) 10 are in a closed state. As the nozzles 6 engage the valve assemblies 10, the valve assemblies 10 switch into their open state so that the compartment(s) can receive fluid dispensed by the nozzles 6 or can deliver the fluid that they contain to the nozzles 6.

In the example of FIG. 1, two valve assemblies 10 are shown on a same side of the consumer product 1 and their respective longitudinal axis A are parallel to one another. Other configurations are possible, for instance with two valve assemblies 10 arranged at opposite sides of the consumer product and/or having a longitudinal axis forming an angle e.g. between 30° and 120°. In yet other configurations, the longitudinal axes A of the valves are not coplanar.

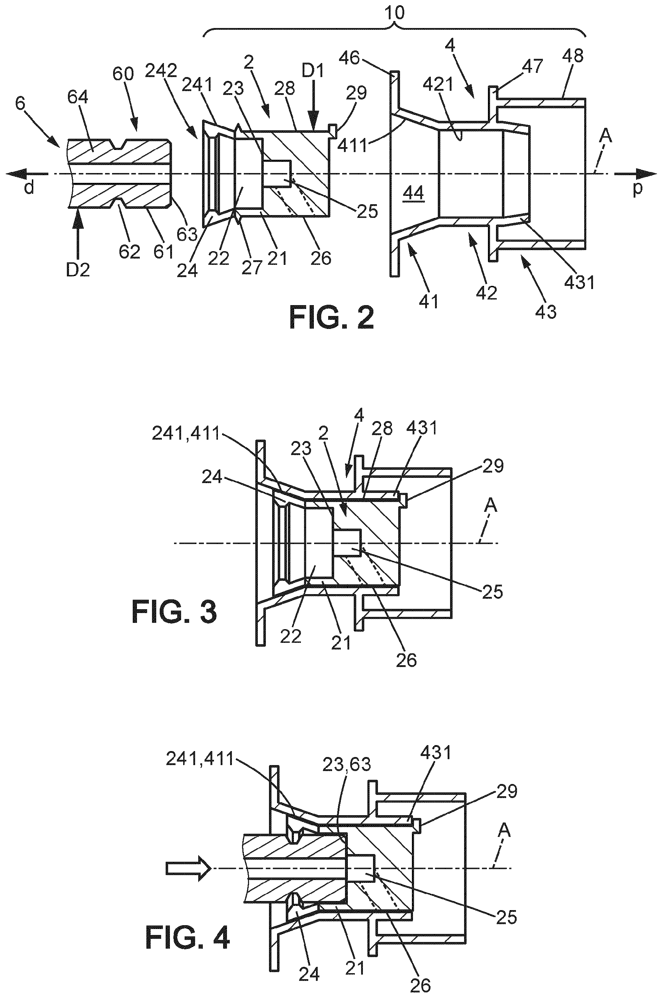

FIG. 2 illustrates an exploded view of a valve assembly 10 and a nozzle 6 having a nozzle head 60. The valve assembly 10 is essentially made of two parts, a valve obturator 2 and a valve holder 4. As will be apparent in the description below, the valve obturator 2 is movably received in the valve holder 4.

The valve holder 4 may be a sub-component of a first device (not shown). The valve holder 4 may be integrally made with the first device. The valve holder may be welded, glued, clamped or sealed to the flexible body.

The nozzle 6 may be a sub-component of a second device (not shown). The nozzle 6 may be integrally made with the second device. The nozzle head 60 is an end portion of the nozzle 6, aimed at cooperating with the valve obturator 2.

The valve assembly 10 is centered on an axis A which defines a proximal direction (towards label p) and a distal direction (towards label d). The axis A defines a cylindrical coordinate system. The axial or longitudinal direction is parallel to axis A. The radial direction is perpendicular to the axis A. In the present disclosure, the terms radially inner, radially outer, radially inward or radially outward, refer to a radial direction towards the axis A or away from this axis. The circumferential or tangential direction is perpendicular to the axis A and to the radial direction.

The valve obturator 2 comprises an obturator body 21 which is substantially symmetric around axis A. The diameter D1 of the obturator body 21 may be comprised between 3 mm and 300 mm, preferably between 5 mm and 20 mm.

The overall length of the valve obturator 2 may be comprised between 5 mm and 500 mm, preferably between 10 mm and 50 mm, more preferably between 12 mm and 14 mm.

The obturator body 21 comprises a housing 22 which can be a recess having a cylindrical shape. The housing 22 has a diameter that is smaller than the diameter of the obturator body 21. For example, the diameter of the housing 22 may be less than 90% of the diameter of the obturator body 21. The diameter of the housing 22 may be comprised between 2 mm and 270 mm, preferably between 3 mm and 15 mm. As explained below, the housing 22 is intended to receive a nozzle head 60 which may have a substantially similar diameter. A bead (not shown) can be provided in the housing 22 to reduce friction between the nozzle head 60 and the cylindrical surface of the housing 22.

In some examples, the housing 22 does not have a circular profile (seen perpendicularly to axis A) but another cylindrical profile such as, for example, a hexagonal profile or a gear-like profile (i.e. the housing has internal axial grooves). The housing 22 may also have a specific lock- and-key shape to cooperate with the nozzle head 60 having a corresponding shape.

The housing 22 may have a length in the axial direction that is less than half of, preferably less than a third of, the length of the obturator 2. The axial length of the housing 22 may be comprised between 2 mm and 5 cm, preferably between 4 mm and 20 mm, more preferably about 5 mm.

The housing 22 is delimited by an abutment surface 23. The abutment surface 23 may be substantially planar and may extend perpendicularly to the axis A.

The obturator 2 further comprises at least one locking tab 24 extending in the distal direction from the obturator body 21. In some examples, the at least one locking tab 24 is constituted by an annular row of locking tabs 24, or in other words a series of locking tabs 24 distributed circumferentially along a distal edge of the obturator body 21. The locking tabs 24 may be separated from one another by a circumferential gap.

On FIG. 2, the locking tabs 24 are shown in their resting position. As will be apparent below, the locking tabs 24 are flexible and they can bend radially inwardly before reverting to their resting position.

The material and/or dimensions of the locking tab(s) 24 is chosen such that the locking tab(s) 24 do not suffer plastic creep when under continuous stress for a long duration. For example, the consumer product 1 may be engaged in nozzles 6 for several weeks and it is important to avoid any leakage or any deterioration of the valve from happening due to a potential failure of the locking tabs: even after several weeks under stress, the locking tab should, when the consumer product 1 is removed from the nozzles 6, ensure a proper feedback force to seal the valve assembly 10 in a closed position.

Each locking tab 24 comprises a radially outer surface 241. The radially outer surface 241 may be substantially frustoconical. In the resting position of the locking tab 24, the radially outer surface 241 may form an angle that is comprised between 10° and 80° with respect to the axis A. In preferred embodiments, this angle is comprised between 15° and 45°, more preferably between 20° and 30°.

In some examples, the outer surface 241 of the locking tab 24 may not be a portion of a cone and may have a more complex profile, for instance with a wavy surface. This could be advantageous to increase the stability or flexibility of the locking tab 24 in the resting position.

In some examples, as will be apparent in the description below, the outer surface 241 has a profile (in the cross-section of FIG. 2) which mirrors the profile of a tapered surface of the valve holder 4.

Each locking tab 24 further comprises an inner coupling element 242. In the example shown on FIG. 2, the inner coupling element 242 is a rib. In a variant example, the inner coupling element 242 comprises more than one rib, for example two ribs distant from one another in the axial direction, or distant from one another in the circumferential direction. In a variant, the inner coupling element 242 is at least one groove. In yet another variant, the inner coupling element 242 may be an inner thread. The rib 242 may be chamfered, i.e. having a front inclined surface. The front inclined surface can be inclined with respect to the axis A of an angle comprised between 60° and 80°. This can help alignment with the nozzle head. In some examples, the locking tabs may have a shape of a hook, to offer a higher friction when cooperating with the nozzle head.

As explained below, the inner coupling element 242 is intended to mirror the shape of an outer coupling element of a nozzle head 60.

The valve obturator 2 further comprises a central channel 25 extending from the abutment surface 23 to at least one peripheral aperture 26. As will be described below, when the obturator 2 is in the closed position, the peripheral aperture(s) 26 is/are obturated, thereby preventing fluid from passing through the central channel 25.

The valve obturator 2 comprises an annular external sealing rib 27 protruding from an external surface 28 of the obturator 2. The annular external sealing rib 27 is aimed at cooperating with the valve seat of the valve holder 4. In some examples, there may be more than one annular external sealing rib 27.

The valve obturator 2 may comprise at least one stopper 29 at an axial end opposite the locking tab 24. The stopper 29 may be an L-shape latch that extends from the obturator body 21 at an axial end thereof opposite the locking tabs 24. As will be explained below, the stopper 29 abuts against a cantilevered ring 431 of the valve holder 4 as the valve obturator 2 is in the closed position. Similar to the locking tabs 24, the valve obturator 2 may comprise an annular row of stoppers 29, i.e., a series of circumferentially arranged and distanced stoppers 29. In another example, the stopper 29 may be at an intermediate location in the valve obturator 2 or in a distal side of the valve obturator 2. The stopper may be a ring abutting against an edge or a shoulder of the valve holder. Other stopper configurations may be apparent to the person skilled in the art, with the aim of preventing or reducing the likelihood of the valve obturator 2 being pulled out of the valve holder 4.

In use, the valve obturator 2 is held in a valve holder 4. The valve obturator 2 may be snapped in the valve holder 4 before first use, or during the manufacturing process of the valve assembly 10. This may be done by inserting the valve obturator 2 in the proximal direction in the valve holder 4. At some point, the stopper 29 may deform the cantilevered ring 431 until the stopper 29 has passed the ring. The cantilevered ring 431 then flexes inwardly and prevents any movement of the valve obturator 2 in the distal direction. The stopper 29 may be chamfered to facilitate the insertion in the proximal direction.

The valve obturator 2 and the valve holder 4 may be made of a same material, preferably a polymer material, more preferably polyethylene or polypropylene.

Both the valve obturator 2 and the valve holder 4 can be produced by injection molding using a simple core and cavity action with two sliders, positioned opposite each other. For the valve obturator, the sliders determine the size of the channel 25 and apertures 26, hence the flow rate.

The valve holder 4 may have a neck or other shapes that facilitates handling the valve holder 4, for example during manufacturing (for assembling the valve obturator 2 therein, or for welding the film(s) of the flexible body 8 on the valve holder 4) or during (re)filling/emptying operations.

The valve holder 4 may comprise, from distal side to proximal side: a front section 41, a central section 42 and a rear section 43. The valve holder 4 may have a generally tubular or sleeve-like shape. The outer diameter of the valve holder 4 may be comprised between 4 mm and 350 mm, preferably between 6 mm and 25 mm. The overall length of the valve holder 4 may substantially match the length of the valve obturator and/or may be comprised between 5 mm and 500 mm, preferably between 10 mm and 50 mm, more preferably between 12 mm and 14 mm.

The inner surface of the valve holder 4 constitutes a valve seat 44 for the valve obturator 2, i.e., the obturator 2 is retained in the valve holder 4.

The front section 41 may be generally tapered outwards in the distal direction. The front section 41 comprises a tapered surface 411, the tapered surface 411 being narrower in the proximal direction and wider in the distal direction.

The tapered surface 411 is intended to contact the outer surface 241 of the locking tab(s) 24 when the valve obturator 2 is in the closed position. The tapered surface 411 also facilitates assembly when inserting the valve obturator into the valve holder.

The inclination of the tapered surface 411 with respect to the axis A may be equal to or less than the angle of the outer surface 241 of the locking tabs 24 in the resting position. Hence, the tapered surface 411 may be inclined with respect to axis A of an angle comprised between 10° and 80° with respect to the axis A. In preferred embodiments, this angle is comprised between 15° and 45°, more preferably between 20° and 30°. In some examples, this angle is at least 1° or at least 2° or at least 5° less than the angle that the outer surface 241 forms with the axis A in the resting position of the locking tabs 24. This difference in angle may ensure that the locking tabs 24 apply a locking pressure on the tapered surface 411.

The front section 41 may further comprise a front flange 46 extending radially from a distal edge of the tapered surface 411.

The central section 42 of the valve holder 4 comprises a cylindrical inner surface 421 which may face and/or contact the outer surface 28 of the valve obturator 2. As the valve obturator 2 is in the closed position, the peripheral apertures 26 of the obturator body 21 are obturated by the cylindrical inner surface 421 of the central section 42. The central section 42 may further comprise a central flange 47 extending radially outwardly.

The rear section 43 comprises a cantilevered ring 431 which extends from the central section 42 and is tapered inwardly. The ring 431 may be considered as cantilevered with respect to the central section 42. Indeed, the cantilevered ring 431 must in this example be free to bend radially outwardly when the valve obturator 2 is snapped in the valve holder 4 in particular to let the stopper 29 pass in the proximal direction when assembling the valve assembly 10. In use, when the valve obturator 2 is in the closed position, the stopper 29 abuts axially against the cantilevered ring 431.

A rear sleeve 48 may extend from the flange 47. The rear sleeve 48 may be cylindrical or may have an eye shape. The rear sleeve 48 may form an eye-shaped port for connection to the flexible body 8. For instance, the film(s) 86, 88 of the flexible body 8 may be sealed on the sleeve 48.

The valve assembly 10 is configured to cooperate with a nozzle head 60. The nozzle head 60 is an axial end portion of a nozzle 6. The nozzle 6 may be part of or may be connected to a second device acting as a fluid source or a fluid receiver.

As explained below, the nozzle head 60 is movable relative to the valve holder in the axial direction.

The nozzle head 60 comprises a generally tubular shape, with an external surface 61 having a diameter noted D2. The diameter D2 is substantially equal to the diameter of the housing 22. In some variant examples, the housing 22 does not have a cylindrical shape (e.g. gear-like profile or notches, polygonal cross-section, etc.) and the external surface 61 of the nozzle head 60 has a shape that is complementary to the shape of the housing 22.

An outer coupling element 62, here represented as a groove, is aimed at cooperating with the rib 242 of the locking tab(s) 24. In a variant example, the outer coupling element 62 is a rib and the inner coupling element 242 of the locking tab 24 is a groove. In yet another example, the coupling elements may be an inner and an outer thread. In such a case, the relative movement of the nozzle head 60 and the valve holder 4 to open or close the valve assembly 10 may include a rotation around axis A in addition to the translation along axis A. The diameter of the nozzle on a distal side of the outer coupling element 62 may be greater, equal or smaller than the diameter of the housing 22.

The axial distance between a proximal surface 63 of the nozzle head 60 and the outer coupling element 62 is substantially equal to the axial distance between the abutment surface 23 and the inner coupling element 242, such that, as the proximal surface 63 contacts the abutment surface 23, the inner coupling element 242 engages the outer coupling element 62.

The radial width of the locking tabs 24 is greater than the radial thickness between the housing 22 and the external surface 28 of the body 21. Thus, it is necessary for the locking tabs 24 to engage the groove 62 before they can bend inwardly under contact with the surface 421.

The nozzle head 60 comprises a conduit 64 that is open on the proximal surface 63. The fluid may flow from the nozzle head 60 to the valve obturator 2 (or vice versa) through the conduit 64. The conduit 64 may have a diameter that is substantially equal to the diameter of the central channel 26 of the valve obturator 2. The central channel 26 and/or the conduit 64 may comprise a one-way valve mechanism preventing back pressure or leakage when decoupling the nozzle head 60 from the valve assembly 1.

FIG. 3 shows the valve assembly 10 in the closed configuration. In that configuration, the valve obturator 2 seats in the closed position, where the outer surface 241 of the locking tabs 24 contacts the tapered surface 411 of the valve holder 4. The inclination of the locking tabs 24 and the tapered surface 411 prevents the valve obturator 2 from inadvertently moving in the proximal direction, away from the closed position. This prevents unintentional actuation of the valve in the trade, during transport, or when handled by a consumer.

The stopper 29 may contact the cantilevered ring 431 to prevent the valve obturator 2 from inadvertently moving in the distal direction, escaping the valve holder 4.

The cantilevered ring 431 applies a radial force on the external surface 28 of the valve obturator 2, to assist further holding and/or centering the valve obturator 2 in the valve seat 44.

In the closed position shown on FIG. 3, a fluid cannot pass through the central channel 25 since the peripheral aperture 26 is closed by the body of the valve holder 4.

FIG. 4 shows the valve assembly 10 in the closed configuration. The nozzle head 60 has been introduced in the housing 22 of the valve obturator 2. The proximal surface 63 of the nozzle head 60 contacts the abutment surface 23 and makes a liquid tight connection as the valve assembly is still closed. The introduction of the nozzle head 60 in the housing 22 may result from an axial movement of the nozzle head 60 in the proximal direction, and/or from a movement of the valve holder 4 in the distal direction.

In some examples, the valve assembly comprises a tamper-proof element (not shown) which ensures that the content of the product has not been altered from the factory. The tamper-proof element may help prevent any leakage, should the valve assembly be unexpectedly damaged during transport or storage. The tamper-proof element may be formed by an aluminum foil, a plastic film, or an adhesive patch (label, sticker, etc.) covering the valve mouth. The tamper-proof element may be an integrated plastic plug, cap or cover that is torn away, removed or folded backwards upon first use of the consumer product. The tamper-proof element may be removed by an adult hand before the valve assembly engages the nozzle head, or alternatively the tamper-proof element may be pierced by the nozzle upon first use of the consumer product, i.e., between the configuration of FIG. 3 and the one shown on FIG. 4.

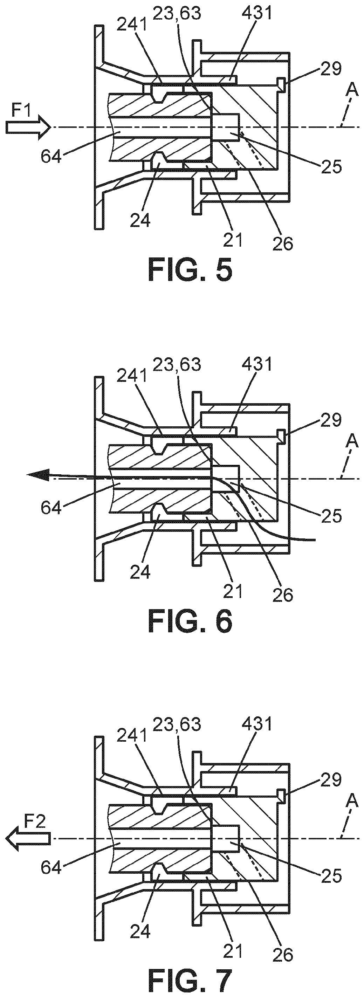

FIG. 5 shows an open configuration of the valve assembly 10. This constitutes a subsequent situation where the nozzle head 60 has been pushed further into the proximal direction and/or the valve holder 4 pushed further in the distal direction compared to the configuration illustrated in FIG. 4. This additional movement leads the locking tabs 24 to bend inwardly under the pressure of the valve seat 44 in the central section 42. The inner coupling element (rib) 242 of the locking tab 24 engages the outer coupling element (groove) 62 of the nozzle head 60. In other words, a force applied by the nozzle head 60 on the abutment surface 23 in the direction of the arrow F1 shown on FIG. 5 made the valve obturator 2 move out of the closed position. Alternatively or in addition, an opposite force can be applied by the abutment surface 23 on the nozzle head 60 (e.g. by moving the valve holder 4 in the distal direction).

Between the closed position of FIG. 4 and the open position of FIG. 5, the locking tabs 24 have progressively left contact with the tapered surface 411, and they have progressively joined contact with the outer surface 61 of the nozzle head 60. Also, the outer coupling element 62 progressively engages the inner coupling element 242 of the at least one locking tab 24 as the valve obturator 2 moves from the closed position to the open position.

In the open position shown on FIG. 5, the peripheral aperture 26 is no longer obturated by the body of the valve holder 4. A fluid can pass through the conduit 64, through the central channel 25 and through the peripheral aperture 26 (in one or the opposite direction).

FIG. 6 shows the same position as in FIG. 5 and an arrow illustrates the flow of fluid, from the compartment of the flexible body to the dishwasher. In that case, the liquid flows in the distal direction. When the consumer product is being (re)filled, the fluid can flow in the proximal direction.

The size or shape of the peripheral aperture 26 can be chosen to obtain a given fluid flowrate. The apertures 26 of the two or more valve assemblies may differ in that respect.

In order to revert the valve assembly 10 to the closed position, a force can be applied by pulling the nozzle head 60 as shown on the arrow F2 on FIG. 7. Alternatively or in addition, an opposite force can be applied by the locking tabs 24 on the nozzle head 60 (e.g. by pulling the valve holder 4 in the proximal direction).

Once the nozzle head 60 has been pulled out, the stopper 29 contacts the valve holder 4 and limits the movement of the valve obturator 2 in the distal direction. The locking tabs 24 move radially outwardly to elastically retrieve their resting position in contact with the tapered surface 411. Indeed, in the front section 41, the locking tabs get the freedom to move radially outwards while the nozzle head 60 is pull out to disconnect the system. The outward movement of the locking tabs 24 releases the outer coupling element and allows the nozzle head 60 to be withdrawn out of the housing 22.

It is important to note that the movement of the obturator from the closed position to the open position, as well as the movement from the open position to the closed position, happen as the nozzle head 60 is received in the housing 22. In other words, the portion of the nozzle 6 from the outer coupling element 62 to the proximal surface 63 is and remains in the housing 22 of the valve obturator 2 from the moment when the valve obturator 2 starts to switch out of its closed position, and until the moment the valve obturator 2 is back into the closed position. This means that extracting the nozzle head 60 from the housing 22 can only be done when the valve obturator 2 is in the closed position. This also means that pulling out the nozzle head 60 with the intention to disconnect the nozzle head 60 from the valve assembly 10 results in the closure of the valve assembly 10. This is particularly beneficial for preventing or reducing leakage and for making simple the handling of the valve assembly 10.

After the nozzle head 60 has been entirely pulled out, the valve assembly 10 retrieves the same configuration as shown on FIG. 3.

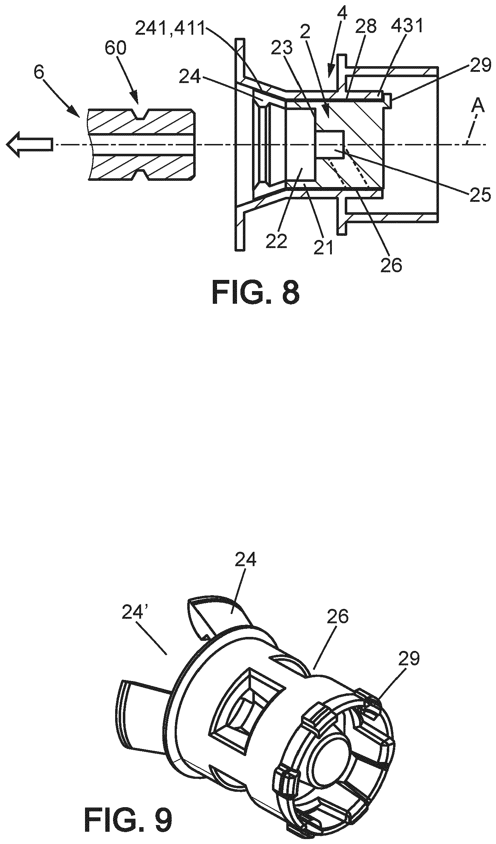

FIG. 8 illustrates the nozzle head 60 completely pulled out of the valve obturator 2.

The overall travel of the valve obturator 2 in the valve holder 4 from the closed position to the open position may be comprised between 2 mm and 50 mm, preferably between 5 mm and 20 mm, more preferably between 10 mm and 12 mm.

In summary, the opening and closing of the valve may be obtained by a simple axial movement of the two respective parts: nozzle head and valve holder. Depending on the application intended for the present valve assembly, the relative movement between the valve holder and the nozzle head may be operated by hand, or may be at least partly automated by means of an actuator such as a piston, a linear motor, a magnet embedded in the nozzle head or valve holder, a mechanical lever, etc. As explained above in the presence of a thread, in some examples the relative movement may be a combination of an axial movement and of a rotation.

FIG. 9 shows an isometric view of an example valve obturator 2. One can see that the locking tabs 24 may be arranged as an annular row of tabs 24, separated from one another by a circumferential gap 24'. In this example, there are four locking tabs 24 evenly distributed in the circumferential direction.

The size and number of locking tabs may be adapted to ensure a predetermined resistance to the movement of the valve obturator 2 in the valve holder 4, or feedback force when retrieving the resting position.

FIG. 9 also shows the peripheral apertures 26. In this example, there are four peripheral apertures 26. They are all fluidly connected to a single central channel 25. Other arrangements are possible without departing from the essence of the present valve assembly. For example, the nozzle head may comprise more than one conduit and the valve obturator 2 may comprise more than one central channel 25, so that several distinct fluids can be transferred from the nozzle to the valve holder 4 or vice versa.

The size, shape or number of peripheral apertures 26 may be adapted to ensure a predetermined fluid flow rate or resistance to flow.

As shown on FIG. 9, the peripheral apertures 26 and the locking tabs may be staggered / offset circumferentially. In other words, the peripheral apertures 26 may be aligned with the gaps 24' rather than with the locking tabs.

FIG. 9 also shows that the stopper 29 may be comprised of an annular row of stoppers 29. In this example, six stoppers 29 have been provided.

The size and number of stoppers may be adjusted to obtain a trade-off between the necessary force resisting to the valve holder 2 being pulled out of the valve holder 4 (in the proximal direction), yet to allow the valve obturator 2 being snapped in the valve holder 4 (in the proximal direction). The stoppers 29 may be chamfered on their proximal side to facilitate the initial insertion of the valve obturator 2 in the valve holder 4.

In the proximal side of the valve obturator 2, a recess can be provided to reduce the weight of the valve holder. This design may also result from the manufacturing of the valve obturator 2 by injection molding.

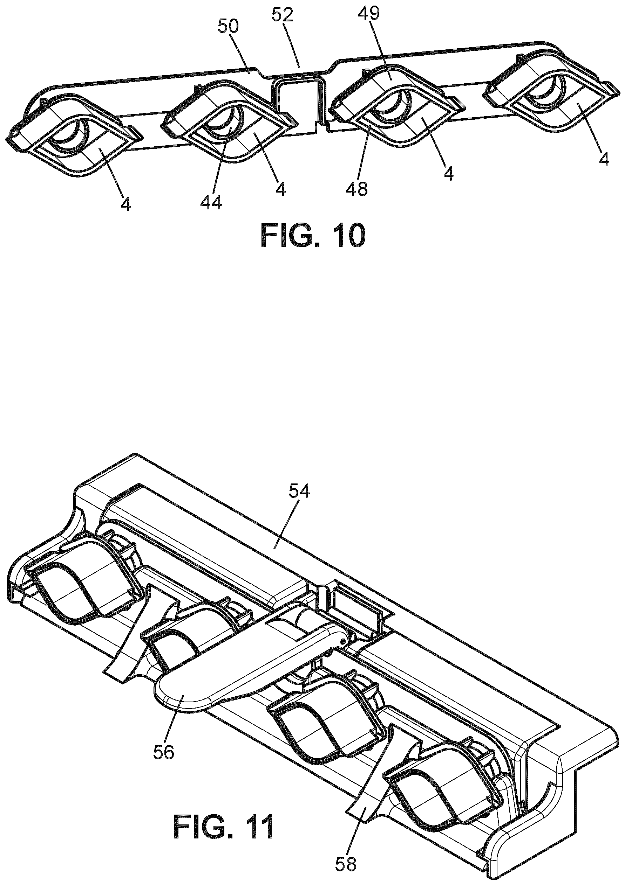

FIG. 10 shows a series of valve holders 4 aligned and attached to a guiding bar 50. This figure also shows an example of valve holders 4 with eye-shaped ports 48. The outer surface of the eye-shaped ports 48 can be provided with a textured element 49, such as ribs or grooves, for example zig-zag ribs. The films (not shown, 86, 88 on FIG. 1) constituting the flexible body 8 may be (heat) sealed on the eye-shaped ports 48. Sealing may be done by induction, ultrasonic, microwave techniques, impulse sealing technique, or other techniques.

The guiding bar 50 may assist the positioning of the consumer product 1 in use: the guiding bar 50 may be received in a rail or a casing of complementary shape. For instance, this would allow to immobilize the consumer product as the nozzle(s) are pushed towards the consumer product to engage the valve assemblies.

In some examples, the guiding bar 50 is integrally formed with the valve holders 4, for example by co-molding, or co-injection.

The guiding bar 50 may comprise coupling elements such as a notch 52 which may assist locking the guiding bar 50 in position. The coupling elements may also act as an error-proof / mechanical coding mechanism (poka yoke), preventing a user from misplacing the consumer product in the dishwasher or in a dispensing machine.

FIG. 11 shows the series of valve holders 4 and the guiding bar 50 of FIG. 10 engaged in a casing 54. The casing 54 may contain a lever 56, which when pulled down cooperates with the notch 52. Locking elements 58 can constitute abutments to the guiding bar 50 in various directions of space.

This arrangement enables to lock the consumer product in place by placing the guiding bar 50 in the casing 54 as the lever 56 is pivoted upwards; and then pulling down the lever 56. Opposite the valve holders 4, the casing 54 comprises holes that enable the nozzle heads to pass through, so as to engage the valve obturators.

In one example, an actuation on the lever 56 moves nozzle heads (not visible) closer to the valve to engage and open the valves as discussed above. The lever 56 may additionally control the travel distance of the nozzle heads relative to valves to fully open the valves, fully close the valves, or to operate the valves in an intermediate position (not at full flow rate).

Alternatively, the lever 56 can move the guiding bar 50 (and the valve holders) closer to fixed nozzle heads (not visible).

Alternatively, the lever 56 may only secure the consumer product in place, while a distinct mechanism provides for a movement of nozzle heads. The nozzle heads may move independently from one another, so as to leave closed the valve which does not need to be opened.

The lever 56 may also properly control the closing of the valves when the consumer product is disengaged from the dishwasher, thereby avoiding leakage or spillage. This renders the consumer product economic and safe to use.

The lever can be spring-loaded to pop open or be opened by pushing an activation button or via an electrical impulse. Hence, the dishwasher can automatically open the lever and disconnect the valves on demand. This may be advantageous if a leak or a defect is detected, or when the consumer product is empty. The consumer product may be inserted in a casing or a slit, which is rendered inaccessible to the user until the consumer product is empty, whereby it is ejected.

The guiding bar may be reinforced to make it stiffer with additional ribs or T-beams or double I-beam structures or the like. The guiding bar can be provided with slots to reduce material use while maintaining stiffness and structural strength. These slots can also match corresponding receiving parts in the receiver to fix and hold the consumer product firmly in position.

The guiding bar 50 may also assist securing the consumer product 1 during manufacturing, i.e. for sealing the films on the ports 48 or for filling the flexible body with fluid(s).

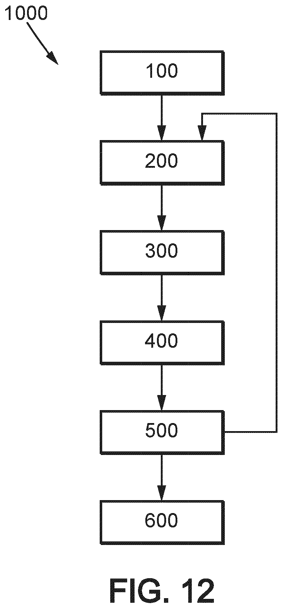

FIG. 12 shows a flowchart of a method 1000 for operating the consumer product discussed above.

The method comprises providing 100 a nozzle head 60 in the vicinity of a valve assembly 10 of the consumer product as discussed above.

By default, the valve assembly 10 assumes a closed position.

The method comprises performing 200 a relative displacement between the nozzle head 60 and the valve holder 4 so as to make the nozzle head 60 enter the housing 22 of the valve assembly 10. The outcome of this method step is shown in FIG. 4, where the proximal surface 63 of the nozzle head 60 contacts the abutment surface 23 of the valve obturator 2 lying in its closed position.

Then, the method comprises a step of performing 300 a further relative displacement so that the nozzle head 60 pushes on the abutment surface 23 of the valve assembly 10 or the abutment surface 23 of the valve assembly 10 pushes on the nozzle head 60, until the valve obturator 2 is moved into the open position. The outcome of this step is shown in FIG. 5.

Then, the method comprises dispensing 400 a fluid from a compartment of the flexible body to the nozzle head 60 through a central channel 25 of the valve obturator 2 and through a conduit 64 of the nozzle head 60 (as visible on FIG. 6); or dispensing a fluid from a device comprising or attached to the nozzle head 60, to a compartment of the flexible body in fluid communication with the valve assembly, through a conduit 64 of the nozzle head 60 and through a central channel 25 of the valve obturator 2. The dispensation of the fluid may result from the fluid being under pressure, or from a vacuum, or any external force (e.g. gravity, electromagnetic force, squeeze force, etc.). The consumer product can be used in any orientation (upside down, sideways, etc.).

The method may further comprise, once the desired amount of fluid has been transferred, interrupting 500 dispensing a fluid by performing a relative displacement pulling the valve holder 4 away from the nozzle head 60 or vice versa, until the valve obturator 2 reaches the closed position. The initial relative displacement (see FIG. 7) still maintains the arrangement leak tight, until the full closure of the valve.

Steps 200 to 500 may be repeated at will.

In some examples, the fluid is dispensed from the compartment to the nozzle until the compartment is empty. Then, the consumer product may be uncoupled from the nozzle and may be brought to a dispenser for filling the compartment, before the consumer product is used back again with a (or the same) nozzle. With the consumer product of the present disclosure, as soon as the consumer product is uncoupled from the nozzle heads, the valves are mechanically closed. This prevents leakage or spillage and protects the user handling the consumer product.

At some point, it may become necessary to replace the valve obturator 2 which may have worn out, or it may become necessary to recycle the valve assembly or the consumer product. Step 600 illustrates that step, wherein the valve obturator 2 may or may not be extracted from the valve holder 4 for further handling.

As mentioned above, the valve obturator 2 and valve holder 4 of the valve assemblies may be made of a same polymer. This may also be the same polymer as the film constituting the flexible body. This enables to recycle the consumer product without contaminating the (plastic/polymer) recycling stream. Preferred polymers can be polyethylene (PE), polypropylene (PP), polyethylene terephthalate (PET), with an amount of recycled PE, PP or PET comprised between 0% and 100%.

Additional benefits and alternative designs may become apparent to the person skilled in the art without departing from the intended scope of the present disclosure as recited in the appended claims.

### Examples of a valve assembly usable in the consumer product of the present disclosure

The present disclosure may also relate to the various aspects described below, alone or in combination with any of the other aspects or with any of the appended claims.

In a 1st aspect, a valve assembly comprises: an axis defining a proximal direction and a distal direction opposite the proximal direction; a valve holder comprising a valve seat comprising a tapered surface, the tapered surface being narrower in the proximal direction and the tapered surface being wider in the distal direction; and a valve obturator engaged in the valve seat and reversibly movable between a closed position and an open position, the valve obturator comprising: a housing configured to receive a nozzle head; an abutment surface, wherein the valve obturator is configured to move from the closed position to the open position upon application, by the nozzle head received in the housing, of a first force on the abutment surface, the first force being oriented in the proximal direction; and at least one locking tab contacting the tapered surface as the valve obturator is in the closed position, wherein the valve obturator is configured to move from the open position to the closed position upon application, by the nozzle head received in the housing, of a second force on the at least one locking tab, the second force being oriented in the distal direction.

In a 2nd aspect, the valve obturator and the valve holder are made of a same material, preferably a polymer material, more preferably polyethylene or polypropylene.

In a 3rd aspect, the at least one locking tab is configured to assume a radially outward resting position as the valve obturator is in the closed position, enabling the nozzle head moving in the distal direction to be released; and the at least one locking tab is configured to assume a radially inward pre-stressed position as the valve obturator is in the open position.

In a 4th aspect, the at least one locking tab is configured such that, as the nozzle head pushes the abutment surface, the at least one locking tab bends radially inwardly, progressively contacting an outer surface of the nozzle head and a central portion of the valve seat.

In a 5th aspect, the at least one locking tab comprises an inner coupling element configured to progressively engage an outer coupling element of the nozzle head as the valve obturator moves from the closed position to the open position.

In a 6th aspect, the valve seat has a front section comprising the tapered surface, a central section comprising a substantially cylindrical surface and a rear section comprising a tapered cantilevered ring.

In a 7th aspect, the at least one locking tab comprises an annular row of two or more locking tabs, circumferentially distant from each other.

In an 8th aspect, the valve obturator comprises a central channel extending from the abutment surface to at least one peripheral aperture.

In a 9th aspect, the valve obturator is snapped in the valve holder.

In a 10th aspect, the valve obturator comprises at least one stopper at one axial end thereof opposite the locking tab, the at least one stopper abutting against a cantilevered ring of the valve holder as the valve obturator is in the closed position.

In a 11th aspect, the cantilevered ring is tapered inwardly and applies a radial force on an external surface of the valve obturator.

In a 12th aspect, the valve obturator comprises an annular external sealing rib.

In a 13th aspect, a connecting kit comprises the valve assembly according to any of aspects 1 to 12 and a nozzle head configured to cooperate with the valve obturator.

In a 14th aspect, the valve obturator comprises a central channel extending from the abutment surface and the nozzle head comprises a conduit, the central channel and the conduit having substantially a same diameter, the central channel and the conduit being aligned along the axis.

In a 15th aspect, A method comprises: providing a nozzle head in the vicinity of a valve assembly; performing a relative displacement between the nozzle head and the valve holder so as to make the nozzle head enter the housing of the valve assembly and make a leak tight connection between the nozzle head and the valve obturator; performing a further relative displacement so that the nozzle head pushes on the abutment surface of the valve assembly or the abutment surface of the valve assembly pushes on the nozzle head, until the valve obturator is moved into the open position; and dispensing a fluid from a first device comprising or attached to the valve holder, to the nozzle head through a central channel of the valve obturator and through a conduit of the nozzle head; or dispensing a fluid from a second device comprising or attached to the nozzle head, to the first device through a conduit of the nozzle head and through a central channel of the valve obturator.

In a 16th aspect, the method further comprises interrupting dispensing a fluid by performing a relative displacement pulling the valve holder away from the nozzle head or vice versa, until the valve obturator reaches the closed position.

In a 17^{th} aspect, a consumer product comprises: a flexible body delimiting at least one compartment; an auto-dishwashing detergent composition contained in the at least one compartments; at least one valve assembly fluidly connected to at least one respective compartment of the at least one compartment, wherein the at least one valve assembly is in accordance with any of the aspects 1 to 12.

The detergent composition held in one or more of the compartments may be in accordance with the following.

### Detergent ingredients.

Suitable detergent ingredients can be described in terms of systems. The composition typically comprises one or more of an alkalinity system, a bleach system, a builder system, a chelant system, an enzyme system, a polymer system, and a surfactant system. Suitable detergent ingredients can also include other detergent ingredients.

### Alkalinity system.

The alkalinity system typically achieves the target pH profile of the composition. The pH profile of the composition impacts the cleaning profile of the composition. Alkalinity typically provides soil swelling and soil dispersion performance, as well as providing the optimal pH for other detergent ingredients to work, such as the bleach system, builder system, chelant system and enzyme system.

The composition typically comprises from 1.0g to 10g alkalinity system. The amount of alkalinity system is typically determined by the desired pH profile of the composition.

The composition may comprise, by weight of the composition, from 10wt% to 35wt%, or from 11wt% to 34wt%, or from 25wt% to 36wt%, or from 25wt% to 35wt% alkaline system.

The solid component may comprise, by weight of the solid component, from 10wt% to 35wt%, or from 11wt% to 34wt%, or from 25wt% to 36wt%, or from 25wt% to 35wt% alkaline system.

Any suitable source of alkalinity can be used. Suitable sources of alkalinity are organic alkaline ingredients and inorganic alkaline ingredients.

A suitable alkalinity system comprises ingredients selected from carbonate salts, silicate salts, and sources of hydroxide anions.

The composition can comprise from 1.0g to 10g carbonate salt.

Preferred carbonate salts are selected from alkali metal salts of carbonate and/or alkaline earth metal salts of carbonate. Preferred carbonate salts are selected from magnesium carbonate, potassium carbonate, sodium carbonate, and any combination thereof, most preferably sodium carbonate.

Preferably, the composition comprises from 1.0g to 10g sodium carbonate.

The composition can comprise from 0.1g to 5.0g silicate salt.

The composition may comprise, by weight of the composition, from 1.0wt% to 20wt%, or from 1.0wt% to 17wt% silicate salt.

The solid component may comprise, by weight of the solid component, from 3.0wt% to 20wt%, or from 3.0wt% to 18wt% silicate salt.

The liquid component may comprise, by weight of the liquid component, from 20wt% to 50wt% silicate salt.

Preferred silicate salts are selected from alkali metal salts of silicate and/or alkaline earth metal salts of silicate. Preferred silicate salts are selected from magnesium silicate, potassium silicate, sodium silicate, and any combination thereof, most preferably sodium silicate. Preferred sodium silicates have a weight ratio SiO₂ to Na₂O ratio of from 1.0:1 to 3.5:1, preferably from 1.5:1 to 2.5:1, most preferably 2.0:1 (sodium disilicate).

Preferably, the composition comprises from 0.1g to 5.0g sodium silicate.

The composition may comprise from 0.01g to 2.0g source of hydroxide.

The composition may comprise, by weight of the composition, from 0.10wt% to 10wt%, or from 0.10wt% to 8.0wt%, or from 0.11wt% to 6.7wt% source of hydroxide.

Preferred sources of hydroxide are selected from alkali metal hydroxide and/or alkaline earth metal hydroxide. Preferred sources of hydroxide are selected from magnesium hydroxide, potassium hydroxide, sodium hydroxide, and any combination thereof, most preferably sodium hydroxide.

### Bleach system.

Typically, the bleach system provides cleaning and disinfection benefits.

Typically, the composition comprises from 0.1g to 10g bleach system.

The composition may comprise, by weight of the composition, from 1.0wt% to 40wt%, or from 1.0wt% to 35wt%, or from 1.0wt% to 33.7wt% bleach system.

The solid component may comprise, by weight of the solid component, from 2.5wt% to 35.7wt% bleach system.

The bleach system typically comprises a source of peroxygen, often in combination with a bleach activator and/or a bleach catalyst.

Typically, the composition comprises from 0.1g to 10g, or from 1.0g to 8.0g, or from 2.0g to 6.0g source of peroxygen.

Any suitable source of peroxygen can be used. A suitable source of peroxygen is a perhydrate salt, especially alkali metal perhydrate salts and/or alkaline earth metal perhydrate salts, preferably alkali metal perhydrate salts. Suitable perhydrate salts are selected from perborate salt, percarbonate salt, perphosphate salt, persilicate salt, persulfate salt and any combination thereof.

The perhydrate salt may be a crystalline solid without additional protection. Alternatively, the perhydrate salt can be coated. Suitable coatings are selected from sodium carbonate, sodium silicate, sodium sulphate, and any combination thereof.

A preferred perhydrate salt is an alkali metal percarbonate, especially preferred is sodium percarbonate. The percarbonate is preferably in a coated form. The coating provides in-product stability.

The composition may comprise from 1.0g to 10g, or from 2.0g to 6.0g sodium percarbonate.

The composition may comprise, by weight of the composition, from 10wt% to 35wt%, or from 11wt% to 34wt% sodium percarbonate.

The solid component may comprise, by weight of the solid component, from 25wt% to 40wt%, or from 25wt% to 36wt% sodium percarbonate.

Another suitable source of peroxygen is a pre-formed peracid. A preferred pre-formed peracid is phthalimidoperoxycaproic acid (PAP).

The composition may comprise from 0.1g to 5.0g phthalimidoperoxycaproic acid (PAP).

The composition may comprise, by weight of the composition, from 1.0wt% to 20wt%, or from 1.0wt% to 17wt% phthalimidoperoxycaproic acid (PAP).

The solid component may comprise, by weight of the solid component, from 2.5wt% to 20wt%, or from 2.5wt% to 18wt% phthalimidoperoxycaproic acid (PAP).

The composition may comprise a bleach activator. The composition may comprise from 0.05g to 2.0g, preferably from 0.1g to 2.0g, bleach activator.

The composition may comprise, by weight of the composition, from 0.5wt% to 10wt%, or from 0.5wt% to 7.0wt% bleach activator.

Any suitable bleach activator can be used. Bleach activators are typically used to enhance the bleaching performance at temperatures of 60°C and below.

A suitable bleach activator is an organic peracid precursor. Suitable bleach activators are compounds which, under perhydrolysis conditions, give aliphatic peroxycarboxylic acids having preferably from 1 to 12 carbon atoms, in particular from 2 to 10 carbon atoms, and/or optionally substituted perbenzoic acid. Suitable bleach activators comprise O-acyl and/or N-acyl groups of the number of carbon atoms specified and/or optionally substituted benzoyl groups. Preferred bleach activators are polyacylated alkylenediamines. A highly preferred bleach activator is tetraacetylethylenediamine (TAED).

The composition may comprise from 0.05g to 2.0g, preferably from 0.1g to 2.0g, tetraacetylethylenediamine (TAED).

The composition may comprise a bleach catalyst. The composition may comprise from 0.1mg to 20mg, preferably from 0.5mg to 10mg, bleach catalyst.

The composition may comprise, by weight of the composition, from 0.001wt% to 0.10wt%, or from 0.001wt% to 0.07wt% bleach catalyst.

Any suitable bleach catalyst can be used.

Suitable bleach catalysts are metal-containing bleach catalysts, preferably transition-metal-containing bleach catalysts. Preferred transition-metal-containing bleach catalysts are selected from cobalt-containing bleach catalysts, iron-containing bleach catalysts, manganese-containing bleach catalysts, and any combination thereof.

Suitable manganese-containing bleach catalysts comprise manganese in an oxidation state of (II), (III), (IV), (v), or any combination thereof, preferably (IV).

Suitable manganese-containing bleach catalyst includes manganese triazacyclononane and related complexes, such as 1,4,7-triazacyclononane (TACN).

The composition may comprise from 0.1mg to 20mg, preferably from 0.5mg to 10mg, transition-metal-containing bleach catalyst. The composition may comprise from 0.1mg to 20mg, preferably from 0.5mg to 10mg, cobalt-containing bleach catalyst. The composition may comprise from 0.1mg to 20mg, preferably from 0.5mg to 10mg, iron-containing bleach catalyst. The composition may comprise from 0.1mg to 20mg, preferably from 0.5mg to 10mg, manganese-containing bleach catalyst.

### Builder system.

The composition may comprise from 1.0g to 10g builder system.

The composition may comprise, by weight of the composition, from 10wt% to 35wt%, or from 11wt% to 34wt% builder system.

The solid component may comprise, by weight of the solid component, from 25wt% to 40wt%, or from 25wt% to 36wt% builder system.

The builder system typically comprises detergent ingredients that are complexing agents. Suitable builder complexing agents are capable of sequestering hardness cations, especially calcium cations and/or magnesium cations.

Typically, the builder system controls the hardness of the wash liquor, which in turn aids the cleaning performance and soil suspension performance of the composition. The builder system can also extract calcium and magnesium cations from the soil, which also improves the cleaning performance of the composition.

Any suitable builder complexing agent can be used. Suitable builder complexing agents may also be able to complex other cations, such as transition metal cations.

A preferred builder complexing agent is selected from aminopolycarboxylic acids and/or salts thereof, carboxylic acids and/or salts thereof, and any combination thereof.

Suitable aminopolycarboxylic acids and/or salts thereof are selected from methylglycine-N,N-diacetic acid and/or salts thereof (MGDA), glutamic acid diacetic acid and/or salts thereof (GLDA), iminodisuccinic acid and/or salts thereof (IDS); hydroxyethyleiminodiacetic acid and/or salts thereof (HEIDA), and any combination thereof, preferably methylglycine-N,N-diacetic acid and/or salts thereof (MGDA) and/or glutamic acid diacetic acid and/or salts thereof (GLDA), most preferably methylglycine-N,N-diacetic acid and/or salts thereof (MGDA). A suitable builder complexing agent is the tri-sodium salt of methylglycine-N,N-diacetic acid.

A suitable aminopolycarboxylic acid and/or salts thereof is ethylene diamine disuccinic acid and/or salts thereof (EDDS).

Suitable carboxylic acids and/or salts thereof can be dicarboxylic acids and/or salts thereof, such as glucaric acid and/or salts thereof, itaconic acid and/or salts thereof, maleic acid and/or salts thereof, succinic acid and/or salts thereof, tartaric acid and/or salts thereof, and any combination thereof.

Suitable carboxylic acids and/or salts thereof can be tricarboxylic acids and/or salts thereof, A suitable carboxylic acid and/or salts thereof is citric acid and/or salts thereof. A suitable builder complexing agent is sodium citrate.

The composition may comprise a builder complexing agent selected from methylglycine-N,N-diacetic acid and/or salts thereof (MGDA) and/or citric acid and/or salts thereof. The composition may comprise the combination of methylglycine-N,N-diacetic acid and/or salts thereof (MGDA) and/or citric acid and/or salts thereof.

The composition may comprise from 1.0g to 10g methylglycine-N,N-diacetic acid and/or salts thereof (MGDA). Any suitable methylglycine-N,N-diacetic acid and/or salt thereof (MGDA) can be used. Preferably, the MGDA is the salt form of methylglycine-N,N-diacetic acid, more preferably the MGDA is the tri-sodium salt of methylglycine-N,N-diacetic acid.

The composition may comprise from 1.0g to 10g citric acid and/or salts thereof.

The presence of citric acid and/or salt thereof can be in conjunction with MGDA, or independently thereof.

### Chelant system.

The composition may comprise from 0.1g to 5.0g chelant system.

The composition may comprise, by weight of the composition, from 1.0wt% to 20wt%, or from 1.0wt% to 17wt% chelant system.

The solid component may comprise, by weight of the solid component, from 2.5wt% to 20wt%, or from 2.5wt% to 18wt% chelant system.

The chelant system typically comprising chelating agents. Suitable chelating agents can chelate transition metal cations, especially copper, iron and zinc.

Typically, the chelant system stabilizes the bleaching system by protecting the bleach from transition metal cation degradation. The chelant system can also extract transition metal cations from soils, such as tea soils.

Any suitable chelating agent can be used. Suitable chelating agents may also be able to complex other cations, such as hardness cations like calcium and magnesium.

Suitable chelating agents are selected from phosphonic acids and/or salts thereof. Phosphonic acids and/or salts thereof typically provide crystal growth inhibition performance.

A preferred phosphonic acid and/or salts thereof is selected from: 1-hydroxy ethylidene-1,1 diphosphonic acid and/or salts thereof (HEDP), amino trimethyl phosphonic acid and/or salts thereof (ATMP), diethylene triamine pentamethylene phosphonic acid and/or salts thereof (DTMP), 2- phosphono 1,2,4-butane tricarboxylic acid and/or salts thereof (PBTC), and any combination thereof, preferably 1-hydroxy ethylidene-1,1 diphosphonic acid and/or salts thereof (HEDP). A suitable chelating agent is the tetrasodium salt of 1-hydroxy ethylidene-1,1 diphosphonic acid.

The composition may comprise from 0.1g to 5.0g chelating agent. The composition may comprise from 0.1g to 1.5g 1-hydroxy ethylidene-1,1 diphosphonic acid and/or salts thereof (HEDP).

The composition may comprise, by weight of the composition, from 1.0wt% to 5.0wt% 1-hydroxy ethylidene-1,1 diphosphonic acid and/or salts thereof (HEDP).

The solid component may comprise, by weight of the solid component, from 2.5wt% to 6.0wt%, or from 2.5wt% to 5.0wt% 1-hydroxy ethylidene-1,1 diphosphonic acid and/or salts thereof (HEDP).

### Enzyme system.

The composition may comprise from 1.0mg to 400mg enzyme system.

The enzyme system provides cleaning benefits.

The enzyme typically comprises an enzyme selected from amylase, cellulase, lipase, protease and any combination thereof. Preferably, the enzyme system comprises an amylase and/or a protease.

The composition typically comprises, on an active enzyme basis, from 1.0mg to300mg of each enzyme type included in the composition.

The composition may comprise, by weight of the composition and on an active enzyme basis, from 0.01wt% to 1.0wt% of each enzyme type included in the composition.

The solid component may comprise, by weight of the solid component and on an active enzyme basis, from 0.03wt% to 1.07wt% of each enzyme type included in the solid component.

The composition may comprise, on an active enzyme basis, from 5.0mg to 300mg protease and from 2.0mg to 50mg amylase.

The composition may comprise, by weight of the composition and on an active enzyme basis, from 0.11wt% to 1.01wt% protease.

The solid component may comprise, by weight of the solid component and on an active enzyme basis, from 0.25wt% to 1.07wt% protease.

The composition may comprise, by weight of the composition and on an active enzyme basis, from 0.022wt% to 0.10wt% amylase.

The solid component may comprise, by weight of the solid component and on an active enzyme basis, from 0.05wt% to 0.11wt% amylase.

Suitable enzymes can be in the form of granulates. Suitable enzyme granulates comprise less than 29wt% of sodium sulphate. Suitable granulates comprise sodium sulphate in an amount such that the weight ratio of the sodium sulphate and enzyme (on an active enzyme basis) is less than 4:1.

In describing enzymes, the following nomenclature is used for ease of reference: Original amino acid(s):position(s):substituted amino acid(s). Standard enzyme IUPAC 1-letter codes for amino acids are used.

### Identity.

Percent sequence "identity" means that a particular sequence has at least a certain percentage of amino acid residues identical to those in a specified reference sequence, when aligned using sofware programs such as the CLUSTAL W algorithm with default parameters. See Thompson et al. (1994) Nucleic Acids Res. 22:4673-4680. Default parameters for the CLUSTAL W algorithm are:

| | |
|---|---|
| Gap opening penalty: | 10.0 |
| Gap extension penalty: | 0.05 |
| Protein weight matrix: | BLOSUM series |
| DNA weight matrix: | IUB |
| Delay divergent sequences %: | 40 |
| Gap separation distance: | 8 |
| DNA transitions weight: | 0.50 |
| List hydrophilic residues: | GPSNDQEKR |
| Use negative matrix: | OFF |
| Toggle Residue specific penalties: | ON |
| Toggle hydrophilic penalties: | ON |
| Toggle end gap separation penalty | OFF |

Deletions are counted as non-identical residues, compared to a reference sequence.

### Amylase.

Suitable amylases include alpha-amylases. Suitable amylases are from bacterial or fungal origin.

A preferred alkaline alpha-amylase is derived from a strain of Bacillus, such as Bacillus amyloliquefaciens, Bacillus licheniformis, Bacillus stearothermophilus, Bacillus subtilis, or other Bacillus sp., such as Bacillus sp. 707, AA2560, DSM 9375, DSM 12368, DSM 12649, DSM 12651, KSM AP1378, KSMK36, KSM K38, NCIB 12289, NCIB 12512 or NCIB 12513.

A preferred amylase is a variant of Bacillus sp. DSM12651. A preferred amylase is a variant of Bacillus sp. DSM12651 amylase and has at least 90%, or at least 95%, or even at least 99% identity to the Bacillus sp. DSM12651 amylase wildtype sequence.

A preferred amylase is a variant of Bacillus sp. DSM 12649 amylase. A preferred amylase is a variant of Bacillus sp. DSM 12649 amylase and has at least 90%, or at least 95%, or even at least 99% identity to the Bacillus sp. DSM 12649 amylase wildtype sequence.

A preferred amylase is a variant of Bacillus sp. AA2560 amylase. A preferred amylase is a variant of Bacillus sp. AA2560 amylase and has at least 90%, or at least 95%, or even at least 99% identity to the Bacillus sp. AA2560 amylase wildtype sequence.

A preferred amylase is Bacillus sp. SP707 amylase or a variant thereof. A preferred amylase is Bacillus sp. SP707 amylase or a variant thereof, and has at least 90%, or at least 95%, or even at least 99% identity to the Bacillus sp. SP707 amylase wildtype sequence.

A preferred amylase is a variant of Bacillus sp. NCIB12513 amylase. A preferred amylase is a variant of Bacillus sp. NCIB12513 amylase and has at least 90%, or at least 95%, or even at least 99% identity to the Bacillus sp. NCIB12513 amylase wildtype sequence.

Suitable commercially available alpha-amylases include: KEMZYM^{®} (AT 9000 Biozym Biotech Trading GmbH Wehlistrasse 27b A-1200 Wien Austria); ENZYSIZE^{®}, OPTISIZE HT PLUS^{®}, PURASTAR^{®}, PURASTAR OXAM^{®}, and RAPIDASE^{®}, (Genencor International Inc., Palo Alto, California); KAM^{®} (Kao, 14-10 Nihonbashi Kayabacho, 1-chome, Chuo-ku Tokyo 103-8210, Japan); BAN^{®}, DURAMYL^{®}, FUNGAMYL^{®}, LIQUEZYME^{®}, NATALASE^{®}, POWERASE^{®}, STAINZYME^{®}, STAINZYME PLUS^{®}, SUPRAMYL^{®}, TERMAMYL^{®}, and TERMAMYL ULTRA^{®} (Novozymes A/S, Bagsvaerd, Denmark); and any combination thereof.

Preferred amylases include NATALASE^{®}, POWERASE^{®}, STAINZYME^{®}, STAINZYME PLUS^{®}, and any combination thereof.

### Cellulase.

Suitable cellulases include those of bacterial or fungal origin. Chemically modified or protein engineered mutants are also suitable. Suitable cellulases include cellulases from the genera Bacillus, Pseudomonas, Humicola, Fusarium, Thielavia, Acremonium, e.g., the fungal cellulases produced from Humicola insolens, Fusarium oxysporum, and Myceliophthora thermophila.

Commercially available cellulases include: Biotouch^{®} series of enzymes (AB Enzymes); Revitalenz^{®} series of enzymes (Du Pont); Carezyme^{®}, Carezyme^{®} Premium, Celluclean^{®}, Celluzyme^{®} and Whitezyme^{®} (Novozymes A/S); and any combination thereof.

Suitable commercially available cellulases include Celluclean^{®} Classic and/or Carezyme^{®} Premium.

### Lipase.

Suitable lipases include those of bacterial, fungal or synthetic origin, and variants thereof. Chemically modified or protein engineered mutants are also suitable. Examples of suitable lipases include lipases from Humicola (synonym Thermomyces), e.g., from H. lanuginosa (T. lanuginosus).

A suitable lipase is a variant of the wild-type lipase from Thermomyces lanuginosus, preferably comprising T231R and/or N233R mutations. Preferred lipases include those sold under the tradenames Lipex^{®}, Lipoclean^{®}, and Lipolex^{®} by Novozymes, Bagsvaerd, Denmark.

Other suitable lipases include Liprl 139 and/or TfuLip2.

### Protease.

Suitable proteases include metalloproteases and serine proteases. Suitable proteases include neutral or alkaline microbial serine proteases, such as subtilisins, as well as chemically or genetically modified variants thereof.

Suitable proteases include proteases derived from Bacillus. Suitable proteases include variants of: Bacillus alcalophilus, Bacillus amyloliquefaciens, Bacillus clausii, Bacillus lentus, Bacillus gibsonii Bgi02446, Bacillus gibsonii DSM14391, Bacillus pumilus, and Bacillus subtilis.

A preferred protease is a variant of Bacillus gibsonii protease. A preferred protease is a variant of Bacillus gibsonii Bgi02446 protease or a variant of Bacillus gibsonii DSM14391 protease.

A preferred protease is a variant of Bacillus gibsonii Bgi02446 protease. A preferred protease is a variant of Bacillus gibsonii Bgi02446 protease and has at least 90%, or at least 95%, or even at least 99% identity to the Bacillus gibsonii Bgi02446 protease wildtype sequence.

A preferred protease is a variant of Bacillus gibsonii DSM14391 protease. A preferred protease is a variant of Bacillus gibsonii DSM14391 protease and has at least 90%, or at least 95%, or even at least 99% identity to the Bacillus gibsonii DSM14391 protease wildtype sequence.

A preferred protease is a variant of Bacillus alcalophilus protease. A preferred protease is a variant of Bacillus alcalophilus protease and has at least 90%, or at least 95%, or even at least 99% identity to the Bacillus alcalophilus protease wildtype sequence.

A preferred protease is a variant of Bacillus lentus protease. A preferred protease is a variant of Bacillus lentus protease and has at least 90%, or at least 95%, or even at least 99% identity to the Bacillus lentus protease wildtype sequence.

Suitable commercially available protease enzymes include those sold under the trade names Savinase^{®}, Polarzyme^{®}, Kannase^{®}, Ovozyme^{®}, Everlase^{®} and Esperase^{®} by Novozymes A/S (Denmark), those sold under the tradename Properase^{®}, Purafect^{®}, Purafect Prime^{®}, Purafect Ox^{®}, FN3^{®}, FN4^{®}, Excellase^{®}, Ultimase^{®} and Purafect OXP^{®} by Genencor International, those sold under the tradename Opticlean^{®} and Optimase^{®} by Solvay Enzymes, those available from Henkel/ Kemira, namely BLAP, and any combination thereof.

### Other enzymes.

Other suitable enzymes are bleaching enzymes. Preferred bleaching enzymes are peroxidases/oxidases. Typical bleaching enzymes include those of plant, bacterial or fungal origin, and variants thereof. Commercially available peroxidases include Guardzyme^{®} (Novozymes A/S).

Other suitable bleaching enzymes include choline oxidases and/or perhydrolases.

Suitable enzymes include sugar degrading enzymes. Suitable enzymes include glycosyl hydrolase. A suitable enzyme is selected from glucanase, hemicellulase, mannanase, xylanase, and any combination thereof.

Suitable mannanases are sold under the tradenames Mannastar^{®} (Du Pont) and Mannaway^{®} (Novozymes A/S, Bagsvaerd, Denmark).

Suitable enzymes include pectate lyases. Suitable pectate lyases are sold under the tradenames PrimaGreen^{®} (DuPont) and X-Pect^{®}, Pectaway^{®} (from Novozymes A/S, Bagsvaerd, Denmark).

A suitable enzyme is phospholipase.

### Polymer system.

The composition may comprise from 0.1g to 5.0g, or from 0.5g to 2.0g polymer system.

The composition may comprise, by weight of the composition, from 1.0wt% to 20wt%, or from 1. 1 1wt% to 17wt% polymer system.

The liquid component may comprise, by weight of the liquid component, from 15wt% to 60wt%, or from 20wt% to 50wt% polymer system.

The solid component may comprise, by weight of the solid component, from 2.5wt% to 20wt%, or from 2.5wt% to 18wt% polymer system.

The polymer system can act as soil dispersant as well, as a co-builder to help complex hardness cations such as calcium and magnesium.

The polymer system typically comprises polymers. Suitable polymers are selected from modified polyamine polymers, modified polysaccharide polymers, polyalkylene oxide polymers, polycarboxylate polymers, silicone polymers, terephthalate polymers, other polyester polymers, and any combination thereof.

Preferably, the polymer system comprises polymers selected from polyamine polymers, modified polysaccharide polymers, polyalkylene oxide polymers, polycarboxylate polymers, and any combination thereof, most preferably, polycarboxylate polymers.

The composition may comprise from 0.1g to 5.0g, or from 0.5g to 2.0g polycarboxylate polymers.

### Polycarboxylate polymers.

Polycarboxylate polymers typically comprise at least one carboxy group-containing monomer. The carboxy group-containing monomers are typically selected from acrylic acid, methacrylic acid, fumaric acid, maleic acid, itaconic acid, aconitic acid, mesaconic acid, citraconic acid, methylenemalonic acid, salts thereof, anhydrides thereof, and any combination thereof.

Suitable polycarboxylate polymers include polyacrylate homopolymer having a molecular weight of from 4,000 Da to 9,000 Da, or from 6,000 Da to 9,000 Da. Other suitable carboxylate polymers include copolymers of acrylic acid (and/or methacrylic acid) and maleic acid having a molecular weight of from 50,000 Da to 120,000 Da, or from 60,000 Da to 80,000 Da. The polyacrylate homopolymer and copolymer of acrylic acid (and/or methacrylic acid) and maleic acid are commercially available as Acusol 445 and 445N, Acusol 531, Acusol 463, Acusol 448, Acusol 460, Acusol 465, Acusol 497, Acusol 490 from Dow Chemicals, and as Sokalan CP 5, Sokalan CP 7, Sokalan CP 45, and Sokalan CP 12S from BASF.

Suitable polycarboxylate polymers also include polyitaconate homopolymers, such as Itaconix^{®} DSP 2K^{™} sold by Itaconix, and Amaze SP available from Nouryon.

Suitable polycarboxylate polymers also include co-polymers comprising carboxy group-containing monomers and one or more sulfonate or sulfonic group-containing monomers. The sulfonate or sulfonic group containing monomers are typically selected from 2-acrylamido-2-methyl-l-propanesulfonic acid (AMPS), 2-methacrylamido-2-methyl-l-propanesulfonic acid, 3-methacrylamido-2-hydroxy-propanesulfonic acid, allysulfonic acid, methallysulfonic acid, 3-allyloxy-2-hydroxy-1-propanesulfonic acid, 2-methyl-2-propenen-l-sulfonic acid, styrenesulfonic acid, vinylsulfonic acid, 3-sulfopropyl acrylate, 3-sulfopropylmethacrylate, sulfomethylacrylamide, sulfomethylmethacrylamide and water soluble salts thereof.

Suitable polymers may comprise maleic acid, acrylic acid, and 3-allyloxy-2-hydroxy-1-propanesulfonic acid. Suitable polymers may comprise acrylic acid and 2-acrylamido-2-methylpropane sulfonate, such as those sold under tradename Acusol 588 by Dow Chemicals, Sokalan CP50 by BASF, Aquatreat AR-545, Versaflex 310 and Versaflex 310-37 by Nouryon.

Suitable polymers include poly(itaconic acid-co-AMPS) sodium salt, such as Itaconix^{®} TSI^{™} 322 and Itaconix^{®} CHT^{™} 122 available from Itaconix.

Suitable polymers also include those comprising other structure units in addition to the sulfonate or sulfonic group group-containing monomers and carboxy group-containing monomers.

Suitable polycarboxylate polymers also include co-polymers comprising carboxy group-containing monomers and other suitable monomers. Other suitable monomers are selected from esters and/or amide of the carboxy group-containing monomers, such as C₁-C₂₀ alkyl ester of acrylic acid; alkylene; vinyl ethers, such as methyl vinyl ether, styrene and any mixtures thereof. One specific preferred polymer family of this type is sold under tradename Gantrez by Ashland, which includes Gantrez An (alternating co-polymer of methyl vinyl ether and maleic anhydride), Gantrez S (alternating co-polymer of methyl vinyl ether and maleic acid), Gantrez ES (alternating co-polymer of methyl vinyl ether and maleic acid ester), Gantrez MS (alternating co-polymer of methyl vinyl ether and maleic acid salt).

Suitable polycarboxylate polymers also include polyepoxy succinic acid polymers (PESA). A most preferred polyepoxy succinic acid polymer can be identified using CAS number: 51274-37-4, or 109578-44-1. Suitable polyepoxy succinic acid polymers are commercially available from various suppliers, such as Aquapharm Chemicals Pvt. Ltd (commercial name: Maxinol 600); Shandong Taihe Water Treatment Technologies Co., Ltd (commercial name: PESA), and Sirius International (commercial name: Briteframe PESA).

Suitable polycarboxylate polymers may comprise a monomer having at least one aspartic acid group or a salt thereof, this polymer comprises at least 25 mol%, 40 mol%, or 50 mol%, of said monomer. A preferabed example is sodium salt of poly(aspartic acid) having a molecular weight of from 2000 to 3000 g/mol which is avilable as Baypure^{®} DS 100 from Lanxess. Suitable polyaspartates can be further modified.

*Surfactant system.*

Typically, the surfactant system provides cleaning benefits, shine benefits, water drainage and drying benefits. The surfactant system can act to remove soil and suspend soil.

The composition may comprise from 0.5g to 5.0g, or from 0.6g to 4.0g, or from 0.7g to 3.0g surfactant system.

The composition may comprise, by weight of the composition, from 5.0wt% to 20wt%, or from 5.5wt% to 17wt% surfactant system.

The liquid component may comprise, by weight of the liquid component, from 40wt% to 100wt%, or from 50wt% to 100wt%, or from 50wt% to 99wt%, or from 50wt% to 90wt% surfactant system.

The solid component may comprise, by weight of the solid component, from 10wt% to 20wt%, or from 12.5wt% to 18wt% surfactant system.

The surfactant system can comprise amphoteric surfactant, anionic surfactant, cationic surfactant, nonionic surfactant, zwitterionic surfactant, and any combination thereof. Most preferably, the surfactant system comprises nonionic surfactant.

The surfactant system typically comprises a surfactant, typically one or more, preferably two or more, or three or more, or four or more, or even five or more different types of surfactants, and preferably from 2 to 8, or 3 to 7, or 4 to 6 different types of surfactants.

The surfactant system may have a phase inversion temperature, as measured at a concentration of 1wt% in distilled water, between 20°C and 70°C, preferably between 35°C and 65°C. Phase inversion temperature is the temperature below which a surfactant system partitions preferentially into the water phase (typically as oil-swollen micelles), and above which the surfactant system partitions preferentially into the oil phase (typically as water swollen inverted micelles). Phase inversion temperature can be determined visually by identifying at which temperature cloudiness occurs. The phase inversion temperature of the surfactant system can be determined as follows: a solution containing 1wt% of the surfactant system, by weight of the solution in distilled water, is prepared. The solution is stirred gently before phase inversion temperature analysis to ensure that the process occurs in chemical equilibrium. The phase inversion temperature is taken in a thermostable bath by immersing the solutions in 75 mm sealed glass test tube. To ensure the absence of leakage, the test tube is weighed before and after phase inversion temperature measurement. The temperature is gradually increased at a rate of less than 1°C per minute, until the temperature reaches a few degrees below the pre-estimated phase inversion temperature. Phase inversion temperature is determined visually at the first sign of turbidity.

The surfactant system is typically a low foaming surfactant system.

Preferably, the surfactant system comprises a surfactant selected from:
(i) R-O-EOₓH, wherein R is a C₆-C₁₈ alkyl, and x is from 1 to 30; or
(ii) R-O-EOₓPO_{y}H, wherein R is a C₆-C₁₈ alkyl, x is from 1 to 20, and y is from 1 to 20; or
(iii) R-O-POₓEO_{y}H, wherein R is a C₆-C₁₈ alkyl, x is from 1 to 20, and y is from 1 to 20; or
(iv) R-O- EOₓPO_{y}EO_{z}H, wherein R is a C₆-C₁₈ alkyl, x is y from 1 to 20, y is from 1 to 20, and z is from 1 to 20; or
(v) R-O- POₓEO_{y}PO_{z}H, wherein R is a C₆-C₁₈ alkyl, x is from 1 to 20, y is from 1 to 20, and z is from 1 to 20; or
(vi) HO- EOₓPO_{y}EO_{z}H, wherein, x is from 1 to 50, y is from 1 to 50, and z is from 1 to 50; or
(vii) HO- POₓEO_{y}PO_{z}H, wherein x is from 1 to 50, y is from 1 to 50, and z is from 1 to 50; or
(viii) R-O-EOₓBO_{y}H, wherein R is a C₆-C₁₈ alkyl, x is from 1 to 20, and y is from 1 to 20; or
(ix) R-O-BOₓEO_{y}H, wherein R is a C₆-C₁₈ alkyl, x is from 1 to 20, and y is from 1 to 20; or
(x) any combination thereof.

For the above surfactants (i) to (v) above, the alkyl moiety can be linear or branched, and can be derived from a guerbet alcohol, or can derived from an oxo-alcohol.

Suitable surfactants are non-ionic surfactants.

A suitable surfactant has the formula: R-O-EOₓH, wherein R is a C₆-C₁₈ alkyl, and x is from 1 to 30. Suitable surfactants are Lutensol AO series of surfactants from BASF and Lutensol TO series of surfactants from BASF.

A suitable surfactant has the formula: R-O-EOₓPO_{y}H, wherein R is a C₆-C₁₈ alkyl, x is from 1 to 20, and y is from 1 to 20. Suitable surfactants are Dehypon LS series of surfactants from BASF.

A suitable surfactant has the formula: R-O-PO_{y}EOₓH, wherein R is a C₆-C₁₈ alkyl, x is from 1 to 20, and y is from 1 to 20. Suitable surfactants are Ecosurf EH series of surfactants from Dow.

A suitable surfactant has the formula: R-O- EOₓPO_{y}EOₓH, wherein R is a C₆-C₁₈ alkyl, each x is independently from 1 to 20, and y is from 1 to 20. A suitable surfactant is Plurafac LF403 from BASF.

A suitable surfactant has the formula: R-O- PO_{y}EOₓPO_{y}H, wherein R is a C₆-C₁₈ alkyl, x is from 1 to 20, and each y is independently from 1 to 20. A suitable surfactant is Plurafac SLF180 from BASF.

A suitable surfactant has the formula: HO- EOₓPO_{y}EOₓH, wherein, each x is independently from 1 to 50, and y is from 1 to 50. Suitable surfactants are the Pluronic PE series of surfactants from BASF, and the Tergitol L series of surfactants from Dow.

A suitable surfactant has the formula: HO- PO_{y}EOₓPO_{y}H, wherein x is from 1 to 50, and each y is independently from 1 to 50. Suitable surfactants are the Pluronic RPE series of surfactants from BASF.

Other suitable surfactants include hydroxy mixed ether surfactants. The hydroxy mixed ether surfactants can be modified and/or endcapped. Suitable hydroxy mixed ether surfactants are Dehypon E127 and Dehypon GRA, both from BASF.

A suitable surfactant is amine oxide.

A suitable surfactant is betaine.

A suitable surfactant is an anionic surfactant selected from alkyl ether sulphates, alkyl sulphates, alkyl sulphonates, and any combination thereof.

### Other ingredients.

Other suitable ingredients include aesthetic ingredients, fillers, glass care ingredients, metal care ingredients, perfumes, solvents, suds control agents, and any combination thereof.

Suitable fillers include sulphate salts. Suitable sulphate salts are alkali metal salts of sulphate and/or alkaline earth metal salts of sulphate. Preferred sulphate salts are selected from magnesium sulphate, sodium sulphate, and any combination thereof, most preferably sodium sulphate.

Suitable glass care ingredients include zinc-containing compounds. Suitable zinc-containing compounds include hydrozincite.

Suitable metal care ingredients include benzotriazole (BTA), tolyltriazole (TTA), their salt-forms, and any combination thereof. Preferred salt-forms are sodium forms of BTA and TTA.

Suitable solvents include alkanolamines, polyethers, polyols, and any combination thereof.

Suitable alkanolamines are selected from monoethanolamine, diethanolamine, triethanolamine, and any combination thereof.

Suitable polyethers are selected from glycerol ethers, polyethyleneglycol (PEG), polypropyleneglycol (PPG), glycol ethers, and any combination thereof. Suitable glycol ethers are the E-series and P-series of glycol ethers from Dow.

Suitable polyols are selected from propanediol, glycerol, sorbitol, and any combination thereof.

The solvent can act as a process aid and/or a benefit agent.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm".

## Claims

1. A consumer product (1) comprising:
a flexible body (8) delimiting at least two compartments (82, 84);
an auto-dishwashing detergent composition contained in the at least two compartments;
at least two valve assemblies (10) each fluidly connected to at least one respective compartment (82, 84) of the at least two compartments (82, 84), wherein each of the at least one valve assembly (10) comprises:
a valve holder (4) attached to the flexible body (8), the valve holder (4) comprising a valve seat (44) comprising a distal section (41) away from the respective compartment (82, 84), the distal section (41) comprising a tapered surface (411), the tapered surface (411) being narrower in a proximal direction (p) close to the respective compartment (82, 84) and the tapered surface (411) being wider in a distal direction (d) away from the respective compartment (82, 84); and
a valve obturator (2) engaged in the valve seat (44) and reversibly movable between a closed position and an open position, the valve obturator (2) comprising:
a housing (22) configured to receive a nozzle head (60);
an abutment surface (23), wherein the valve obturator (2) is configured to move from the closed position to the open position upon application, by the nozzle head (60) received in the housing (22), of a first force (F1) on the abutment surface (23), the first force (F1) being oriented in the proximal direction (p); and
at least one locking tab (24) contacting the tapered surface (411) as the valve obturator (2) is in the closed position, wherein the valve obturator (2) is configured to move from the open position to the closed position upon application, by the nozzle head (60) received in the housing (22), of a second force (F2) on the at least one locking tab (24), the second force (F2) being oriented in the distal direction (d),
wherein the respective valve holders (4) of said two or more valve assemblies (10) are fixed on a guiding bar (50).

2. The consumer product (1) of claim 1, wherein the valve obturator (2) and the valve holder (4) are made of a same material, preferably a polymer material, more preferably polyethylene or polypropylene or PET with a range of post-consumer recycled material, PCR, comprised between 0 and 100%.

3. The consumer product (1) of claim 1 or 2, wherein the valve assembly (10) and the flexible body (8) are made of a same polymer material.

4. The consumer product (1) of any of the preceding claims, wherein the at least one locking tab (24) is configured to assume a radially outward resting position as the valve obturator (2) is in the closed position, enabling the nozzle head (60) moving in the distal direction (d) to be released; and the at least one locking tab (24) is configured to assume a radially inward pre-stressed position as the valve obturator (2) is in the open position.

5. The consumer product (1) of any of the preceding claims, wherein the at least one locking tab (24) is configured such that, as the nozzle head (60) pushes the abutment surface (23), the at least one locking tab (24) bends radially inwardly, progressively contacting an outer surface of the nozzle head (60) and a central portion of the valve seat (44).

6. The consumer product (1) of any of the preceding claims, wherein the at least one locking tab (24) comprises an inner coupling element (242) configured to progressively engage an outer coupling element (62) of the nozzle head (60) as the valve obturator (2) moves from the closed position to the open position.

7. The consumer product (1) of any of the preceding claims, wherein the valve seat (44) comprises a front section (41) comprising the tapered surface (411), a central section (42) comprising a substantially cylindrical surface (421) and a rear section (43) comprising an inwardly tapered cantilevered ring (431).

8. The consumer product (1) of any of the preceding claims, wherein two or more valve assemblies (10) of the at least two valve assemblies (10) are arranged on a same side of the consumer product (1).

9. The consumer product (1) of claim any of the preceding claims, wherein the respective valve holders (4) of the at least two valve assemblies (10) and the guiding bar (50) are integrally formed.

10. The consumer product (1) of any of the preceding claims, wherein the respective valve obturators (2) of said two or more valve assemblies (10) move from their respective closed position to their respective open position along directions (A) that are parallel to one another.

11. The consumer product (1) of any of the preceding claims, wherein the at least one locking tab (24) comprises an annular row of two or more locking tabs (24), circumferentially distant from each other.

12. The consumer product (1) of any of the preceding claims, wherein the valve obturator (2) comprises a central channel (25) extending from the abutment surface (23) to at least one peripheral aperture (26), wherein the at least one peripheral aperture (26) is in fluid connection with the respective compartment (82, 84) of the flexible body (8) as the valve obturator (2) is in the open position.

13. The consumer product (1) of any of the preceding claims, wherein the valve obturator (2) is snapped in the valve holder (4).

14. The consumer product (1) of any of the preceding claims, wherein the valve obturator (2) comprises at least one stopper (29) at one axial end thereof opposite the locking tab (24), the at least one stopper (29) abutting against a cantilevered ring (431) of the valve holder (4) as the valve obturator (2) is in the closed position.

15. The consumer product (1) of the preceding claim, wherein the cantilevered ring (431) is tapered inwardly and applies a radial force on an external surface (26) of the valve obturator (2).

16. The consumer product (1) of any of the preceding claims, wherein the valve obturator (2) comprises an annular external sealing rib (27).

17. The consumer product (1) of any of the preceding claims, wherein the valve holder (4) comprises an eye-shaped port (48) and the flexible body (8) comprises at least one plastic film (86, 88) welded to the eye-shaped port (48).

18. The consumer product (1) of any of the preceding claims, wherein the compartments (82, 84) are ventless.

19. The consumer product (1) of any of the preceding claims, wherein the housing (22) comprises a tamper-proof element.

20. The consumer product (1) of any of the preceding claims, wherein the consumer product comprises an identifier adapted to interact, wirelessly or through electric contact, with the nozzle head, or with a device comprising the nozzle head, or with a computing device such as a smartphone.
